(19) Europäisches Patentamt
European Patent Office
Office européen des brevets

(11) Numéro de publication : 0 493 186 A2

(12) DEMANDE DE BREVET EUROPEEN

(21) Numéro de dépôt : **91403412.9**

(22) Date de dépôt : **17.12.91**

(51) Int. Cl.[5] : **C08L 83/07,** A47K 7/02, A01N 47/44

(30) Priorité : **27.12.90 FR 9016603**

(43) Date de publication de la demande : **01.07.92 Bulletin 92/27**

(84) Etats contractants désignés : **AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Chalvin, Christophe**
**1 Rue Jacques de Guehengnies**
**F-60000 Beauvais (FR)**
Inventeur : **Colin, Claudine**
**3, rue Henri Barbusse**
**F-60290 Rantigny (FR)**
Inventeur : **Jorda, Rafael**
**30 Rue Claude Jusseaud**
**F-69110 Sainte-Foy-les-Lyon (FR)**
Inventeur : **Muguet, Jacques**
**36 Rue Carnot**
**F-69190 Saint-Fons (FR)**
Inventeur : **Porte, Hugues**
**6 Chemin de Crépieux**
**F-69300 Caluire (FR)**
Inventeur : **Vidil, Christine**
**7 Rue Cavenne**
**F-69007 Lyon (FR)**
Inventeur : **Wertz, Jean-Luc**
**8 Rue Sainte Angadrême**
**F-60000 Beauvais (FR)**

(74) Mandataire : **Fabre, Madeleine-France et al**
**RHONE-POULENC CHIMIE Service Brevets Chimie 25, quai Paul Doumer**
**F-92408 Courbevoie Cédex (FR)**

# (54) Système organosilicique comprenant un biguanide polymère utilisable notamment pour lutter contre la prolifération bactériennedans les éponges.

(57) La présente invention concerne un système organosilicique ayant des propriétés biocides, caractérisé en ce qu'il est essentiellement constitué par :

(A) : au moins une composition organopolysiloxane, durcissable en un élastomère silicone à température ambiante (23 °C) ou sous l'effet d'une température supérieure à la température ambiante, ayant une viscosité déterminée de manière que ledit système se présente à température ambiante sous forme d'un produit liquide injectable, et

(B) : un principe actif, dispersé de façon homogène au sein de A, consistant dans un sel d'un hydracide ou d'un oxyacide minéral ou d'un acide organique dérivé d'un biguanide polymère linéaire.

La présente invention concerne encore un procédé pour lutter contre la prolifération bactérienne dans les éponges tant au cours de leur période de stockage que pendant la durée de leur utilisation qui consiste à installer un implant au coeur de l'éponge, ledit implant étant réalisé par injection dans l'éponge d'une quantité efficace dudit système organosilicique, suivie de la réticulation de la composition organopolysiloxane qu'il renferme.

EP 0 493 186 A2

La présente invention concerne un système organosilicique comportant une composition organopolysiloxane durcissable en un élastomère et un principe actif formé par un biguanide polymère. Elle concerne encore un procédé pour lutter contre la prolifération bactérienne dans les éponges, tant au cours de leur période de stockage que pendant la durée de leur utilisation, à l'aide dudit système organosilicique.

Dans le présent mémoire, par l'expression "éponge", on entend définir un article cellulosique alvéolaire en volume, souple et poreux, compressible et élastique, destiné notamment à l'utilisation ménagère et aux soins corporels.

On sait qu'un article souple et poreux, même comprimé, retient toujours dans ses pores une certaine dose d'humidité qui, en l'absence d'agent biocide approprié, favorise le développement de micro-organismes malodorants ou malsains. Il est donc désirable de conférer à un pareil article souple et poreux un pouvoir désinfectant durable vis-à-vis de l'eau dont il est imbibé.

Divers procédés ont été proposés pour résoudre ce problème. Ainsi, suivant une première voie, une solution aqueuse du principe actif ou agent biocide (sel d'ammonium quaternaire) d'une part, et une solution aqueuse de carboxyméthylcellulose d'autre part sont introduites successivement et dans un ordre quelconque dans l'éponge, par imprégnation ; le produit de réaction entre le sel d'ammonium quaternaire et la carboxyméthylcellulose forment un précipité insoluble qui adhère à la matière cellulosique de l'éponge. Ce procédé manque souvent d'efficacité car en présence de certains milieux liquides, le précipité se dissout et l'agent biocide est éliminé par lessivage.

Selon une autre voie, l'agent biocide est retenu dans les pores de l'éponge par imprégnation avec un système aqueux à base de l'agent biocide et d'un liant organique coagulable, puis fixation du principe actif par précipitation de l'agent biocide et coagulation du liant (cf. FR-A-2 635 961).

Le but essentiel de la présente invention est de proposer (et il s'agit là du premier objet de l'invention) un nouveau système :

– dans lequel le principe actif est dispersé au sein d'une matrice silicone appropriée,

– système qui, lorsqu'il est utilisé notamment pour la mise en oeuvre (et il s'agit là du second objet de l'invention) d'un procédé de lutte contre la prolifération bactérienne dans les éponges, tant au cours de leur période de stockage que pendant la durée de leur utilisation, permet d'obtenir un relargage contrôlé de l'agent biocide dans l'eau retenue dans les pores desdits articles.

Ainsi, la présente invention, prise dans son premier objet, concerne un système organosilicique ayant des propriétés biocides, caractérisé en ce qu'il est essentiellement constitué par :

(A) : au moins une composition organopolysiloxane, durcissable en un élastomère silicone à température ambiante (23 °C) ou sous l'effet d'une température supérieure à la température ambiante, ayant une viscosité déterminée de manière que ledit système se présente à température ambiante sous forme d'un produit liquide injectable, et

(B) : un principe actif, dispersé de façon homogène au sein de A, consistant dans un sel d'un hydracide ou d'un oxyacide minéral ou d'un acide organique dérivé d'un biguanide polymère linéaire qui comprend dans sa structure des unités de récurrence de formule :

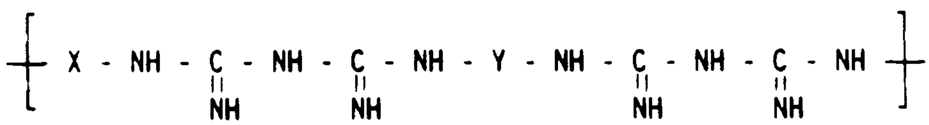

(I)

dans laquelle X et Y, qui peuvent être identiques ou différents, représentent chacun un radical organique divalent de nature aliphatique, cycloaliphatique et/ou aromatique, comportant éventuellement un ou plusieurs hétéroatome(s) tel(s) que notamment N, O ou S, avec la condition supplémentaire selon laquelle le nombre total d'atomes de carbone des restes X et Y pris ensemble (atomes de carbone qui sont directement interposes entre les paires d'atomes d'azote reliés par X et Y) va de 10 à 16.

Le système organosilicique (A) + (B) selon l'invention se présente à température ambiante sous forme d'un produit liquide injectable ; par l'expression "produit liquide injectable", on entend désigner un produit ayant une viscosité à 25 °C au plus égale 1 000 000 mPa.s et de préférence comprise entre 5 000 et 500 000 mPa.s.

Le système organosilicique ayant des propriétés biocides selon l'invention peut comporter de 0,1 à 50 % en poids et, de préférence, de 10 à 35 % en poids de principe actif (B) par rapport au poids de l'ensemble (A) + (B).

Les compositions organopolysiloxanes durcissables (A) utilisables dans le cadre de la présente invention, présentées en un seul ou en plusieurs emballage(s) (mono- ou multicomposants), renferment un constituant principal forme d'un ou plusieurs organopolysiloxane(s), un catalyseur approprié et éventuellement un ou plusieurs composés pris dans le groupe formé par notamment les charges renforçantes ou semi-renforçantes ou de bourrage, les agents de réticulation et les agents d'adhérence ; le constituant principal organopolysiloxane(s) de ces compositions présente avantageusement une viscosité à 25 °C au plus égale à 100 000 mPa.s et de préférence comprise entre 400 et 50 000 mPa.s.

Il est possible de mettre en oeuvre un constituant principal organopolysiloxane(s) ayant une viscosité à 25 °C supérieure à 100 000 mPa.s, comme celle se situant dans l'intervalle allant d'une valeur supérieure à 100 000 mPa.s à 200 000 mPa.s, mais dans ce cas on aura soin d'incorporer en outre dans la composition (A) un agent plastifiant (ou de fluidisation) de manière à ce que la viscosité à 25 °C de l'ensemble constituant principal organopolysiloxane(s) + plastifiant se situe dans l'intervalle général ou préférentiel qui est indiqué dans le paragraphe précédent.

Les organopolysiloxanes, constituants principaux des compositions (A) selon l'invention, peuvent être linéaires, ramifiés ou réticulés, et comporter des radicaux hydrocarbonés et/ou des groupements réactifs comme par exemple des groupes hydroxyles, des groupements hydrolysables, des groupements alkényles, des atomes d'hydrogène, etc ... A noter que les compositions organopolysiloxanes sont amplement décrites dans la littérature et notamment dans l'ouvrage de Walter NOLL : "Chemistry and Technology of Silicones", Academic Press, 1968, 2ème édition, pages 386 à 409.

Plus précisément les organopolysiloxanes, constituants principaux des compositions (A) selon l'invention, sont constitués de motifs siloxyles de formule générale :

$$R_nSiO_{\frac{4-n}{2}} \qquad (II)$$

et/ou de motifs siloxyles de formule :

$$Z_xR_ySiO_{\frac{4-x-y}{2}} \qquad (III)$$

Dans les formules les divers symboles ont la signification suivante :

- les symboles R, identiques ou différents, représentent chacun un groupement de nature hydrocarbonée non hydrolysable, ce radical pouvant être :
  - * un radical alkyle, halogènoalkyle ayant de 1 à 5 atomes de carbone et comportant de 1 à 6 atomes de chlore et/ou de fluor,
  - * des radicaux cycloalkyles et halogènocycloalkyles ayant de 3 à 8 atomes de carbone et contenant de 1 à 4 atomes de chlore et/ou de fluor,
  - * des radicaux aryles, alkylaryles et halogènoaryles ayant de 6 à 8 atomes de carbone et contenant de 1 à 4 atomes de chlore et/ou de fluor,
  - * des radicaux cyanoalkyles ayant de 3 à 4 atomes de carbone ;
- les symboles Z, identiques ou différents, représentent chacun un atome d'hydrogène, un groupement alkényle, un groupement hydroxyle, un atome hydrolysable, un groupement hydrolysable ;
- n = un nombre entier égal à 0, 1, 2 ou 3 ;
- x = un nombre entier égal à 0, 1, 2 ou 3 ;
- y = un nombre entier égal à 0,1 ou 2 ;
- la somme x + y est comprise entre 1 et 3.

A titre illustratif, on peut citer parmi les radicaux organiques R, directement lies aux atomes de silicium : les groupes méthyle ; éthyle ; propyle ; isopropyle ; butyle ; isobutyle ; n-pentyle ; t-butyle ; chlorométhyle ; dichlorométhyle ; α-chloroéthyle ; α,β-dichloroéthyle ; fluorométhyle ; difluorométhyle ; α,β-difluoroéthyle ; trifluoro-3,3,3 propyle ; trifluoro cyclopropyle ; trifluoro-4,4,4 butyle ; hexafluoro-3,3,4,4,5,5 pentyle ; β-cyanoéthyle ; γ-cyanopropyle ; phényle ; p-chlorophényle ; m-chlorophényle ; dichloro-3,5 phényle ; trichlorophényle ; tétrachlorophényle ; o-, p-, ou m-tolyle ; α,α,α-trifluorotolyle ; xylyles comme diméthyl-2,3 phényle, diméthyl-3,4 phényle.

Préférentiellement, les radicaux organiques R liés aux atomes de silicium sont des radicaux méthyle, phényle, ces radicaux pouvant être éventuellement halogénés ou bien encore des radicaux cyanoalkyle.

Les symboles Z peuvent être des atomes d'hydrogène, des atomes hydrolysables tels que des atomes d'halogène, en particulier des atomes de chlore, des groupements vinyles, hydroxyles ou des groupements hydrolysables tels que : amino, amido, aminoxy, oxime, alcoxy, alkényloxy, acyloxy, etc .....

La nature de l'organopolysiloxane et donc les rapports entre les motifs siloxyles (II) et (III) et la répartition

de ceux-ci est comme on le sait choisie en fonction du traitement de réticulation qui sera effectuée sur la composition durcissable (ou vulcanisable) en vue de sa transformation en élastomère.

Il peut ainsi s'agir de compositions durcissables à température élevée sous l'action de péroxydes organiques tels que le péroxyde de dichloro-2,4 benzoyle, le péroxyde de benzoyle, le perbenzoate de t-butyle, le peroxyde de cumyle, le péroxyde de di-t-butyle.

L'organopolysiloxane entrant dans de telles compositions (connues sous l'appellation EVC = Elastomère Vulcanisable à Chaud) est alors constitué essentiellement de motifs siloxyles (II) et ne contient pas de groupes ou d'atomes hydrolysables. De tels EVC sont par exemple décrits dans les brevets US-A-3 142 655, 3 821 140, 3 836 489 et 3 839 266).

Les polyméthylpolysiloxanes terminés par des groupements triméthylsilyles représentent un exemple particulièrement important de cette catégorie sur le plan industriel.

Pour les compositions réticulant à température ambiante (EVF = Elastomère Vulcanisable à Froid), il est possible d'utiliser une grande variété de compositions monocomposantes ou bicomposantes réticulant par des réactions de polyaddition ou de polycondensation en présence d'un catalyseur métallique et éventuellement d'une amine et d'un agent de réticulation.

Les compositions organopolysiloxanes bicomposantes ou monocomposantes réticulant à température ambiante ou à la chaleur par des réactions de polyaddition, essentiellement par réaction de groupements hydrogéno-silylés sur des groupements alkényl-silylés, en présence généralement d'un catalyseur métallique, de préférence au platine, sont décrites par exemple dans les brevets US-A-3 220 972, 3 284 406, 3 436 366, 3 697 473 et 4 340 709. Les organopolysiloxanes entrant dans ces compositions sont en général constitués par des couples à base d'une part d'un polysiloxane linéaire, ramifié ou réticulé constitué de motifs (III) dans lesquels le reste Z représente un groupement alkényle et où x est au moins égal à 1, éventuellement associés à des motifs (II), et d'autre part d'un hydrogéno-polysiloxane linéaire, ramifié ou réticulé constitué de motifs (III) dans lesquels le reste Z représente alors un atome d'hydrogène et où x est au moins égal à 1, éventuellement associés à des motifs (II).

Les compositions organopolysiloxanes bicomposantes ou monocomposantes réticulant à température ambiante par des réactions de polycondensation sous l'action de l'humidité, en présence généralement d'un catalyseur métallique, par exemple un composé de l'étain, sont décrites par exemple pour les compositions monocomposantes dans les brevets US-A-3 065 194, 3 542 901, 3 779 986, 4 417 042, et dans le brevet FR-A-2 638 752, et pour les compositions bicomposantes dans les brevets US-A-3 678 002, 3 888 815, 3 933 729 et 4 064 096. Les organopolysiloxanes entrant dans ces compositions sont en général des polysiloxanes linéaires, ramifiés ou réticulés constitués de motifs (III) dans lesquels le reste Z est un groupement hydroxyle ou un atome ou groupement hydrolysable et où x est au moins égal à 1, avec la possibilité d'avoir au moins un reste Z qui est égal à un groupement hydroxyle ou à un atome ou à un groupement hydrolysable et au moins un reste Z qui est égal à un groupement alkényle quand x est égal à 2 ou 3, lesdits motifs (III) étant éventuellement associes à des motifs (II). De pareilles compositions peuvent contenir en outre un agent de réticulation qui est notamment un silane portant au moins trois groupements hydrolysables comme par exemple un silicate, un alkyltrialkoxysilane ou un aminoalkyltrialkoxysilane.

Les compositions durcissables (A) selon l'invention peuvent comporter en outre - à côté du (ou des) constituant(s) organopolysiloxane(s), du catalyseur et éventuellement de l'agent de réticulation et/ou de l'agent d'adhérence et/ou de l'agent plastifiant des charges renforçantes ou semi-renforçantes ou de bourrage, qui sont de préférence choisies parmi les charges siliceuses.

Les charges renforçantes sont choisies parmi les silices de combustion et les silices de précipitation. Elles ont une surface spécifique, mesurée selon les méthodes BET, d'au moins 50 $m^2/g$, de préférence supérieure à 70 $m^2/g$, une dimension moyenne des particules primaires inférieure à 0,1 micromètre ($\mu m$) et une densité apparente inférieure à 200 g/litre.

Ces silices peuvent être incorporées de préférence telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'héxaméthyldisilazane, l'héxaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 18 % environ.

Les charges semi-renforçantes ou de bourrage ont un diamètre particulaire supérieur à 0,1 $\mu m$ et sont choisies de préférence parmi le quartz broyé, les argiles calcinées et les terres de diatomées.

On peut généralement utiliser de 0,5 à 20 % en poids, de préférence de 1 à 10 % en poids de charge, par rapport au poids du constituant organopolysiloxane(s) des compositions (A).

Des compositions organopolysiloxanes (A) préférées dans le cadre de la présente invention sont celles,

bicomposantes réticulant à température ambiante ou à la chaleur par des réactions de polyaddition, qui comportent :

– (a) : 100 parties en poids d'huile diorganopolysiloxane linéaire bloquée à chaque extrémité de sa chaîne par un motif vinyldiorganosilyle dont les radicaux organiques liés aux atomes de silicium sont choisis parmi les radicaux méthyle, éthyle et phényle, au moins 60 % molaire de ces radicaux étant des radicaux méthyle, et présentant une viscosité allant de 2 500 à 50 000 mPa.s à 25 °C ;

– (b) : au moins un organohydrogénopolysiloxane choisi parmi les homopolymères et les copolymères linéaires ou en réseau présentant par molécule au moins 3 atomes d'hydrogène liés à des atomes de silicium différents et dont les radicaux organiques liés aux atomes de silicium sont choisis parmi les radicaux méthyle, éthyle et 60 % au moins de ces radicaux étant des radicaux méthyle, et présentant une viscosité allant de 400 à 1 000 mPa.s à 25 °C, le produit (b) étant utilisé en quantité telle que le rapport molaire des fonctions hydrure sur les groupes vinyle est compris entre 1,1 et 4 ;

– (c) : une quantité catalytiquement efficace d'un catalyseur au platine ;

– (d) : 0 à 20 parties en poids, de préférence de 0 à 10 parties en poids, de charges siliceuses pour 100 parties en poids de l'ensemble des organopolysiloxanes (a) + (b).

De façon encore plus préférée, jusqu'à 50 % en poids du polymère (a) est remplacé par un copolymère en réseau comportant les motifs triméthylsiloxane, méthylvinylsiloxane et $SiO_{4/2}$ dans lequel 2,5 à 10 % molaire des atomes de silicium comportent un groupe vinyle et dans lequel le rapport molaire des groupes triméthylsiloxane au groupe $SiO_{4/2}$ est compris entre 0,5 et 1.

La quantité pondérale de catalyseur (c), calculée en poids de platine-métal est généralement comprise entre 1 et 600 ppm, de préférence entre 2 et 200 ppm, bases sur le poids de l'ensemble des organosiloxanes (a) + (b).

D'autres compositions organopolysiloxanes (A) préférées sont celles, monocomposantes réticulant à température ambiante par des réactions de polycondensation sous l'action de l'humidité, qui comportent :

– (a') : 100 parties en poids d'huile diorganopolysiloxane linéaire qui :

. est bloquée à chaque extrémité de sa chaîne par un motif triorganosilyle comportant au moins 1 groupe alkoxy ou alkoxyalkylène-oxy ayant de 1 à 6 atomes de carbone lié à l'atome de Si ; le ou les deux autre(s) groupe(s) lié(s) au Si pouvant être le cas échéant un radical hydrocarboné saturé ou non choisi parmi les radicaux méthyle, éthyle, phényle, vinyle, allyle et butène-2 yle,

. possède dans sa chaîne des radicaux organiques liés aux atomes de silicium qui sont choisis parmi les radicaux méthyle, éthyle et 11

phényle, au moins 60 % molaire de ces radicaux étant des radicaux méthyle, et

. présente une viscosité allant de 2 500 à 50 000 mPa.s à 25 °C ;

– (b') : 0 à 20 parties en poids, de préférence 1 à 15 parties en poids, d'au moins un additif choisi parmi des aminoorganosilanes, aminoorganopolysiloxanes et guanidinoorganosilanes portant par molécule à la fois : (i) au moins un groupe organique en $C_3$-$C_{15}$ lié par une liaison SiC à l'atome de silicium et substitué par au moins un radical amino ou un radical guanidino et (2i) au moins un radical alkoxy en $C_1$-$C_6$ ou un radical alkoxyalkylène-oxy en $C_3$-$C_6$ ;

– (c') : une quantité efficace d'un catalyseur à base d'au moins un composé d'un métal choisi parmi l'étain, le titane, le zirconium et leurs mélanges ;

– (d') : 0 à 20 parties en poids, de préférence 1 à 10 parties en poids, de charges siliceuses pour 100 parties en poids de l'organosiloxane (a').

La quantité pondérale de catalyseur (c'), calculée en partie en poids de composé(s) métallique(s) pour 100 parties en poids d'organosiloxane (a') est comprise par exemple entre 0,001 et 1.

Parmi les additifs (b') on peut en particulier citer les silanes de formules :

$$H_2N(CH_2)_3\ Si(OCH_3)_3$$

$$H_2N(CH_2)_3\ Si(OC_2H_5)_3$$

$$H_2N(CH_2)_2NH(CH_2)_3\ Si(OCH_3)_3$$

Pour avoir plus de détails sur la synthèse des organosiloxanes (a') et sur leur utilisation pour préparer des compositions organopolysiloxanes monocomposantes réticulant à température ambiante par des réactions de polycondensation sous l'action de l'humidité, on pourra se reporter tout particulièrement au brevet FR-A-2 638 752 dont le contenu est incorporé ici par référence.

De façon encore plus préférée, le polymère (a') est remplacé par une huile fonctionnelle de même nature que (a') mais possédant une viscosité allant d'une valeur supérieure à 100 000 mPa.s à 200 000 mPa.s à 25 °C, et l'on ajoute alors dans la composition monocomposante (A) un agent plastifiant (e') en quantité déterminée de manière à ce que la viscosité de l'ensemble huile (a') de haute viscosité + plastifiant se situe dans l'intervalle allant de 2 500 à 50 000 mPa.s à 25 °C. La composition (A) est bien entendu constituée dans ce cas par l'ensemble : (a') + (b') + (c') + (d') + (e').

Comme plastifiants (e') qui conviennent bien, on citera par exemple les huiles polydiméthylsiloxanes α,ω-triméthylsilyles ayant une viscosité allant de 50 à 200 mPa.s à 25 °C ; la quantité mise en oeuvre représente 1 à 30 parties en poids de plastifiant pour 100 parties en poids d'huile (a') de haute viscosité.

Revenons maintenant sur la définition du principe actif (B). Dans la formule (I) donnée ci-avant, les groupes divalents X et Y peuvent consister en des groupes $(CH_2)_m$ avec m étant égal à 3-12, comportant éventuellement des hétéro-atomes, par exemple d'oxygène, de soufre et d'azote ; X et Y peuvent aussi renfermer des noyaux cycliques qui peuvent être saturés ou insaturés, auquel cas le nombre d'atomes de carbone directement interposé entre les paires d'atomes d'azote reliés par X et Y englobe le segment du ou des groupes cycliques qui est le plus court. Ainsi, le nombre d'atomes de carbone directement interpose entre les atomes d'azote dans le groupe :

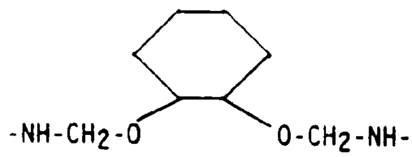

est égal à 4 et non à 8.

Le biguanide polymère que l'on préfère utiliser (sous forme de sel) est le poly(hexaméthylène-biguanide) qui comprend dans sa structure des unites de formule (I) dans laquelle X = Y = $(CH_2)_6$ ; un pareil polymère peut être représenté globalement par la formule :

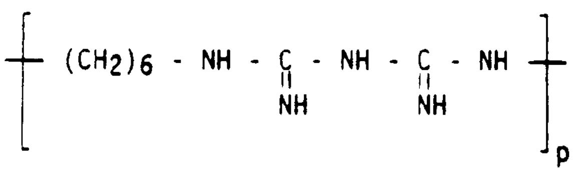

(IV)

dans laquelle p est égal à 3-80 ; de préférence p est égal à 4-10, le poids moléculaire moyen du polymère étant compris alors entre environ 730 et environ 1 830.

Le principe actif (B) que l'on utilise de manière plus préférentielle consiste en chlorhydrate de poly(hexaméthylène-biguanide) ; un pareil sel peut être représenté globalement par la formule :

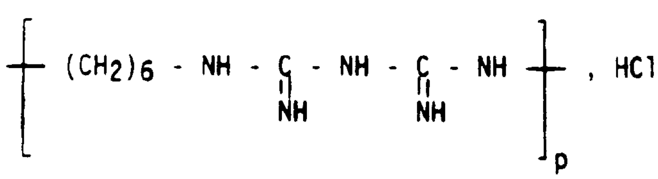

(V)

dans laquelle p a les significations données ci-avant.

Les biguanides polymères peuvent être préparés par réaction d'un bis-dicyano-diamide de formule :

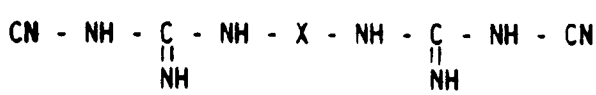

avec une diamine $H_2N$ - Y - $NH_2$, X et Y ayant les définitions données ci-dessus, ou par réaction entre un sel de diamine de dicyanimide de formule :

$$(H_3\overset{+}{N} - X - \overset{+}{N}H_3)(\overset{-}{N}(CN)_2)_2$$

avec une diamine $H_2N$ - Y- $NH_2$ -, X et Y ayant les définitions données ci-dessus. Ces procédés de préparation ont été décrits respectivement dans les brevets britanniques GB-A-702 268 et 1 152 243.

Les chaînes de polymères sont terminées soit par un groupe salifié comme un chlorhydrate d'amine, soit par un groupe

$$-NH-\underset{\underset{NH}{\|}}{C}-NH-CN,$$

soit par un groupe -NHG avec G = alkyle si une petite proportion d'une amine primaire $GNH_2$ est incluse dans la diamine $H_2N$ - Y - $NH_2$. Les sels de biguanide polymère peuvent être préparés par l'un quelconque des divers procédés bien connus de préparation de sels à partir d'une base libre et d'un acide ; les techniques bien connues d'échange ionique à partir du sel préformé peuvent aussi être utilisées.

Comme énoncé ci-avant le princpe actif (B) est dispersé de façon homogène au sein de la composition organopolysiloxane durcissable (A). Ce principe actif se présente sous forme d'une poudre à température ambiante ; il est alors souhaitable que ladite poudre présente une granulométrie comprise entre 1 et 200 µm et, de préférence, entre 1 et 100 µm.

Dans le cas d'une composition organopolysiloxane monocomposante de polycondensation, la dispersion du principe actif est obtenue généralement en réalisant, à température ambiante et à l'abri de l'humidité de l'air, dans un pétrin malaxeur conventionnel, un empâtage à partir de la composition organopolysiloxane (A) à l'état liquide et du principe actif à l'état solide. La durée du malaxage va dépendre notamment de la viscosité de la composition organopolysiloxane à température ambiante ; pour fixer les idées, on retiendra que :

– au départ d'une composition organopolysiloxane (A) ayant une viscosité de l'ordre de 40 000 mPa.s à 25 °C,

– on doit malaxer, dans un malaxeur conventionnel, à température ambiante (23 °C), un mélange de (A) + (B) contenant 20 à 30 % en poids de biocide pendant une durée allant de 10 minutes à 30 minutes afin d'obtenir un système organosilicique biocide au sein duquel le principe actif est réparti de façon homogène.

Dans le cas d'une composition organopolysiloxane bicomposante de polyaddition, on disperse d'abord le principe actif dans la première partie renfermant les groupements alkényl-silylés, puis on mélange ensuite l'ensemble (premiere partie + principe actif en dispersion) avec la seconde partie renfermant les groupements hydrogéno-silylés.

La présente invention, prise dans son second objet, concerne un procédé pour lutter contre la prolifération bactérienne dans les éponges tant au cours de leur période de stockage que pendant la durée de leur utilisation, par incorporation dans les pores de celles-ci d'un principe actif biocide ; ledit procédé est caractérisé en ce qu'il consiste à enchaîner les étapes suivantes :

1. - injection au coeur de l'éponge d'une quantité efficace du système organosilicique (A) + (B) défini ci-avant ;

2. - puis réticulation en élastomère de la composition organopolysiloxane (A) au sein de laquelle est dispersé le principe actif (B).

L'étape 1. est conduite en utilisant l'un quelconque des divers dispositifs connus de l'homme de métier permettant l'injection d'une substance à l'état liquide au sein d'un matériau poreux. Par exemple, lorsque le volume de système organosilicique à introduire est de l'ordre du $cm^3$, on peut utiliser avantageusement une seringue équipée d'une aiguille présentant par exemple un diamètre intérieur de 0,9 mm.

Dans l'étape 2., la réticulation en élastomère est conduite :

– soit par chauffage de l'éponge comprenant le système biocide injecté : à une température allant de 80 à 200 °C pendant une durée allant de 30 secondes à 4 heures dans le cas d'un système biocide à base d'une composition EVC ; ou à une température allant de 65 à 150 °C pendant une durée allant de 30 minutes à 4 heures dans le cas d'un système biocide à base d'une composition EVF de polyaddition ;

– soit en laissant reposer l'éponge comprenant le système biocide à température ambiante (23 °C) et à l'humidité pendant une durée allant de 24 heures à 10 jours ou davantage dans le cas d'un système biocide à base d'une composition EVF de polyaddition ou de polycondensation.

Après réticulation ou durcissement, on obtient un noyau d'élastomère silicone dénommé dans ce qui suit : implant, situé au coeur de l'éponge, dans lequel est disperse le principe actif biocide.

Dans les conditions normales, une quantité de 1 à 5 % en poids de principe actif par rapport au poids de l'éponge à traiter prise à l'état sec se montre efficace. En conséquence, dans la mise en oeuvre de l'étape 1. du procédé de l'invention, par l'expression "quantité efficace du système organosilicique", on entend une quantité de système organosilicique biocide qui, couplée à la concentration en principe actif de ce système, est telle qu'après durcissement de la composition organopolysiloxane la quantité d'implant introduite et retenue dans l'éponge correspond à la gamme donnée ci-dessus. Pour fixer les idées, si par exemple on utilise un système organosilicique à 30 % en poids de principe actif, dans le but de parvenir à un taux de principe actif de 1,5 %

en poids dans un éponge pesant 20 g à l'état sec, on injectera dans celle-ci environ 1 $cm^3$ dudit système organosilicique.

L'implant va libérer progressivement dans l'eau retenue dans l'éponge le principe actif qu'il contient, ce qui freinera ou inhibera le développement des bactéries. Sans vouloir limiter l'invention à une théorie scientifique, on pense que, en dépit de leur très faible solubilité dans l'élastomère silicone, les sels de biguanide polymère sont libérés au cours du temps non par un mécanisme de diffusion au sein de l'élastomère, mais selon un mécanisme de microcraquelures qui peut être décomposé en les quatre étapes suivantes : (i) pénétration de l'eau dans l'élastomère silicone, (2i) hydratation des particules de sel, (3i) déchirure interne du matériau silicone sous l'action de la pression osmotique générée par les grains et (4i) élution du sel. Ce système présente l'avantage de permettre le contrôle de la libération du principe actif par la maîtrise de paramètres fondamentaux tels que notamment la granulométrie (g) des particules de principe actif, le taux (t) de principe actif au sein de l'implant et la quantité d'implant injectée dans l'éponge. Plus (g) est petit et plus la vitesse de libération du biocide est faible. Plus (t) est grand et plus la concentration en biocide dans l'eau retenue dans l'éponge est grande ; à noter que lorsque le taux se situe au-dessus de 50 % en poids, d'une part la réalisation de l'empâtage devient difficile et d'autre part on se situe dans la zone dite de percolation marquée par l'apparition de chemins préférentiels lors de l'élution du sel, du fait de la très grande proximité des grains de biocide.

Les exemples donnés ci-après illustrent l'invention de façon non limitative. Dans tout ce qui suit, les % et parties sont en poids, sauf mentions contraires.

- EXEMPLE 1 :

1. - Préparation du système organosilicique biocide selon l'invention par mise en oeuvre d'une composition organopolysiloxane bicomposante, réticulant à température ambiante ou à la chaleur, par des réactions de polyaddition :

1.1. - Préparation de la composante n°1 : on homogénéise à température ambiante (23 °C) dans un malaxeur les constituants suivants :

– (a1) : 25 parties de résine silicone comportant 40 % molaire de motifs $(CH_3)_3SiO_{1/2}$, 6 % molaire de motifs $(CH_3)(CH_2 = CH)\ SiO_{2/2}$ et 53,5 % molaire de motifs $SiO_{4/2}$ ;

– (a2) : 75 parties d'une huile diméthylpolysiloxane bloquée à chacune des extrémités de sa chaîne par un motif $(CH_3)_2(CH_2 = CH)SiO_{1/2}$ ; la viscosité de l'ensemble (a1) + (a2) est de 3 500 mPa.s à 25 °C ;

– (c) : 40 ppm calculés en poids, par rapport à l'ensemble (a1) + (a2) + (b) (cf. ci-après), de platine métal apporte par une solution à 0,25 % d'acide chloroplatinique préparée par agitation à température ambiante de 0,6 partie d'acide hexachloroplatinique, 10 parties d'isopropanol, 55 parties de xylène et 6 parties de tétraméthyl-1,1,3,3 divinyl-1,3 disiloxane.

On prépare ensuite un empâtage par malaxage à température ambiante (23 °C) de :

– la totalité du mélange (a1) + (a2) + (c) qui vient d'être confectionné,

– et 47 parties de chlorhydrate de poly(hexaméthylène-biguanide). Ce biocide est le produit commercialisé par la Société ICI sous la marque déposée VANTOCIL 1B : il présente une masse moléculaire moyenne en nombre de 1 000 g/mole et il est broyé avant son utilisation dans un broyeur à couteaux, commercialisé sous la marque déposée IKA, puis tamisé de façon à mettre en oeuvre un biocide ayant une granulométrie moyenne inférieure à 100 μm.

L'ensemble constitué par le mélange {(a1) + (a2) + (c)} et le principe actif est agité pendant 5 minutes de manière à bien disperser le principe actif ; on obtient ainsi la composante n° 1.

1.2. - Préparation de la composante n° 2 : on homogénéise à température ambiante (23 °C) dans un malaxeur les constituants suivants :

– (b) : - 45 parties de résine silicone liquide hydrogénée, de viscosité 500 mPa.s à 25 °C, préparée par hydrolyse de silicate d'éthyle et de $(CH_3)_2HSiCl$ en des quantités correspondant à une mole de silicate pour deux moles de $(CH_3)_2HSiCl$ en solution dans le toluène ; cette résine présente donc un rapport molaire théorique de motifs $(CH_3)_2HSiO_{1/2}/SiO_{4/2}$ de 2 et un rapport molaire réel de 2,23 ;

- 12,5 parties de la résine (a1) de la composante n° 1 ; et

- 37,5 parties de l'huile vinylée (a2) de la composante n° 1.

1.3. - Préparation du système biocide selon l'invention : le système biocide est obtenu par mélange, à température ambiante (23 °C), de 10 parties de la composante n° 1 à 1 partie de la composante n° 2. Ce mélange est réalisé à l'aide d'un malaxeur et l'agitation est maintenue pendant 5 minutes de manière à bien disperser le principe actif. Le système biocide homogène obtenu possède une viscosite de 25 000 mPa.s à 25 °C.

2. - Protocole expérimental du traitement biocide d'une éponge :

L'éponge utilisée est faite en cellulose régénérée, et elle se présente sous forme d'échantillon de 20 g (poids à l'état sec), de forme parallélépipédique.

Ladite éponge est préconditionnée de la manière suivante : on a plongé l'éponge dans de l'eau distillée jusqu'à saturation ; on a ensuite pressée l'éponge jusqu'à un taux de foulardage de 200 %, la quantité d'eau retenue dans les pores étant donc de 40 $cm^3$.

On réalise l'injection d'un $cm^3$ du système biocide homogène dans l'éponge humide à l'aide d'une seringue équipée d'une aiguille de 0,9 mm de diamètre intérieur.

La réticulation en élastomère de la composition organosiloxane entrant dans la constitution du système biocide est effectuée par chauffage de l'éponge ainsi traitée à 100 °C pendant 2 heures. On peut également effectuer cette réticulation à température ambiante (23 °C) pendant environ 30 heures. Cette réticulation donne naissance à un noyau d'élastomère silicone, situé au coeur de l'éponge, dans lequel est dispersé le principe actif, qui est dénommé implant.

On détermine ensuite la cinétique de libération dans l'eau du biocide contenu dans l'implant de la manière suivante :

– l'éponge avec son implant est placée dans un récipient de 1 000 $cm^3$ d'eau distillée, thermostatée à 20 °C,
– le récipient est équipé d'un système d'agitation magnétique, animé d'un mouvement de rotation lent (100 tours/minute) assurant l'homogénéité de la solution ; il est recouvert d'un couvercle afin de minimiser l'évaporation de l'eau,
– des prélèvements de 2 $cm^3$ sont réalisés régulièrement : tous les jours pendant les premiers temps de l'élution, puis 3 fois par semaine et enfin toutes les semaines,
– le dosage du VANTOCIL dans l'eau est réalisé par spectrophotométrie U.V. à une longueur d'onde de 235 nm,
– dans le tableau 1 suivant sont rassemblés les résultats de la cinétique d'élution dans l'eau ; les temps indiqués sont les temps de prélèvement : Q correspond à la quantité totale de principe actif libéré à l'instant de chaque prélèvement, QO correspond à la quantité initiale de principe actif dans l'implant, et le rapport 100 Q/QO donne le pourcentage de la quantité de principe actif libérée.

TABLEAU 1

| TEMPS (jour) | 100 Q/QO |
|---|---|
| 1 | 26,0 |
| 2 | 36,8 |
| 3 | 47,0 |
| 6 | 63,5 |
| 10 | 71,2 |
| 15 | 72,5 |

- EXEMPLE 2 -

1. Préparation du système organosilicique biocide selon l'invention par mise en oeuvre d'une composition organopolysiloxane monocomposante réticulant à température ambiante par des réactions de polycondensation sous l'action de l'humidité de l'air :

1.1. - Préparation de la composition organopolysiloxane : on charge à température ambiante (23 °C) dans un appareil muni d'une forte agitation et à l'abri de l'humidité :

– (a') : 100 parties d'une huile polydiméthylsiloxane linéaire fonctionnalisée en bout de chaîne (positions $\alpha$ et $\omega$) par des groupes vinyldiméthoxysilyles, présentant une viscosité à 25 °C de 175 000 mPa.s ; cette huile est préparée comme indiqué ci-après ;

– (e') : 24 parties d'un plastifiant consistant dans une huile polydiméthylsiloxane $\alpha,\omega$-triméthylsilyle ayant une viscosité de 100 mPa.s à 25 °C ; l'ensemble de l'huile (a') et du plastifiant (e') présente après homogénéisation une viscosité de 40 000 mPa.s à 25 °C ;

– (b') : 2 parties d'un additif de formule :

$$(CH_3O)_3Si(CH_2)_3NH(CH_2)_2NH_2$$

– (c') : 0,05 partie de dilaurate de dibutylétain ; et

– (d') : 8 parties de silice de combustion traitée à l'octaméthylcyclotétrasiloxane.

1.2. - Préparation du système organosilicique : on réalise ensuite un empâtage par malaxage à température ambiante (23 °C) de :

– la totalité du mélange (a') + (e') + (b') + (c') + (d') (134,05 parties)

– et 33,5 parties du VANTOCIL 1B ayant les caractéristiques décrites ci-avant à l'exemple 1.

L'ensemble constitué par le mélange {(a') + (e') + (b') + (c') + (d')} et le principe actif est agite pendant 10 minutes de manière à bien disperser le principe actif. Le système organosilicique biocide homogène ainsi obtenu possède une viscosité de 60 000 mPa.s à 25 °C.

1.3. - Préparation de l'huile (a') : on charge dans un appareil muni d'une forte agitation 100 g (0,143 mole) d'un $\alpha,\omega$-dihydroxypolydiméthylsiloxane ayant 3,8 % de radicaux hydroxy. On introduit de l'azote anhydre dans ce réacteur et sous agitation on ajoute à 23 °C : 5 g de vinyltriméthoxysilane et 0,005 g de LiOH, $H_2O$ en solution à 10 % dans le méthanol. On laisse réagir 5 minutes à 28 °C et on neutralise la lithine avec 0,064 g de l'agent neutralisant à base de silylphosphate qui est décrit à l'exemple 1 du FR-A-2 638 752.

3. - Protocole du traitement biocide d'une éponge :

On procède exactement comme indiqué à l'exemple 1, partie 2). A noter que la réticulation s'effectue ici en 7 jours à 23 °C.

Les résultats de la cinétique d'élution dans l'eau sont rassembles dans le tableau 2 ci-après.

TABLEAU 2

| TEMPS (jour) | 100 Q/QO |
|---|---|
| 1 | 6,7 |
| 4 | 13,3 |
| 6 | 20,9 |
| 10 | 22,9 |
| 20 | 27,6 |
| 30 | 29,0 |
| 44 | 31,4 |
| 66 | 34,3 |
| 87 | 39,0 |
| 123 | 42,9 |

## Revendications

**1. -** Système organosilicique ayant des propriétés biocides, caractérisé en ce qu'il est essentiellement constitué par :

(A) : au moins une composition organopolysiloxane, durcissable en un élastomère silicone à température ambiante (23 °C) ou sous l'effet d'une température supérieure à la température ambiante, ayant une viscosité déterminée de manière que ledit système se présente à température ambiante sous forme d'un produit liquide injectable, et

(B) : un principe actif, dispersé de façon homogène au sein de A, consistant dans un sel d'un hydracide ou d'un oxyacide minéral ou d'un acide organique dérivé d'un biguanide polymère linéaire qui comprend dans sa structure des unités de récurrence de formule :

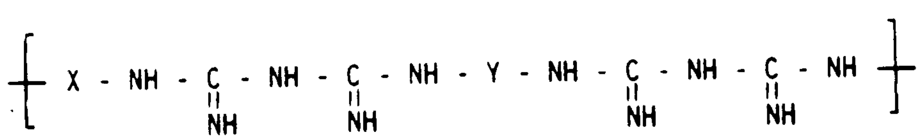

dans laquelle X et Y, qui peuvent être identiques ou différents, représentent chacun un radical organique divalent de nature aliphatique, cycloaliphatique et/ou aromatique, comportant éventuellement un ou plusieurs hétéroatome(s) tel(s) que notamment N, O ou S, avec la condition supplémentaire selon laquelle le nombre total d'atomes de carbone des restes X et Y pris ensemble (atomes de carbone qui sont directement interposés entre les paires d'atomes d'azote reliés par X et Y) va de 10 à 16.

**2. -** Système selon la revendication 1, caractérisé en ce qu'il comporte 0,1 à 50 % en poids de principe actif (B) par rapport au poids de l'ensemble (A) + (B).

**3.** - Système selon la revendication 1 ou 2, caractérisé en ce que les compositions organopolysiloxanes (A) durcissables en élastomère silicone renferment un constituant principal formé d'un ou plusieurs organopolysiloxane(s), un catalyseur approprié et éventuellement un ou plusieurs composés pris dans le groupe formé par : les charges renforçantes ou semi-renforçantes ou de bourrage, les agents de réticulation, les agents d'adhérence et les agents plastifiants.

**4.** - Système selon la revendication 3, caractérisé en ce que les organopolysiloxanes, constituants principaux des compositions (A), sont constitués de motifs siloxyles de formule générale :

$$R_nSiO_{\frac{4-n}{2}} \qquad (II)$$

et/ou de motifs siloxyles de formule :

$$Z_xR_ySiO_{\frac{4-x-y}{2}} \qquad (III)$$

formules dans lesquelles les divers symboles ont la signification suivante :

– les symboles R, identiques ou différents, représentent chacun un groupement de nature hydrocarbonée non hydrolysable, ce radical pouvant être :

* un radical alkyle, halogènoalkyle ayant de 1 à 5 atomes de carbone et comportant de 1 à 6 atomes de chlore et/ou de fluor,

* des radicaux cycloalkyles et halogènocycloalkyles ayant de 3 à 8 atomes de carbone et contenant de 1 à 4 atomes de chore et/ou de fluor,

* des radicaux aryles, alkylaryles et halogènoaryles ayant de 6 à 8 atomes de carbone et contenant de 1 à 4 atomes de chlore et/ou de fluor,

* des radicaux cyanoalkyles ayant de 3 à 4 atomes de carbone ;

– les symboles Z, identiques ou différents, représentent chacun un atome d'hydrogène, un groupement alkényle, un groupement hydroxyle, un atome hydrolysable, un groupement hydrolysable ;

– n = un nombre entier égal à 0, 1, 2 ou 3 ;

– x = un nombre entier égal à 0, 1, 2 ou 3 ;

– y = un nombre entier égal à 0,1 ou 2 ;

– la somme x + y est comprise entre 1 et 3.

**5.** - Système selon la revendication 3 ou 4, caractérisé en ce que les compositions organopolysiloxanes sont des compositions bicomposantes, réticulant à température ambiante ou à la chaleur par des réactions de polyaddition, qui comportent :

– (a) : 100 parties en poids d'huile diorganopolysiloxane linéaire bloquée à chaque extrémité de sa chaîne par un motif vinyldiorganosilyle dont les radicaux organiques liés aux atomes de silicium sont choisis parmi les radicaux méthyle, éthyle et phényle, au moins 60 % molaire de ces radicaux étant des radicaux méthyle, et présentant une viscosité allant de 2 500 à 50 000 mPa.s à 25 °C ;

– (b) : au moins un organohydrogénopolysiloxane choisi parmi les homopolymères et les copolymères linéaires ou en réseau présentant par molécule au moins 3 atomes d'hydrogène liés à des atomes de silicium différents et dont les radicaux organiques liés aux atomes de silicium sont choisis parmi les radicaux méthyle, éthyle et 60 % au moins de ces radicaux étant des radicaux méthyle, et présentant une viscosité allant de 400 à 1 000 mPa.s à 25 °C, le produit (b) étant utilisé en quantité telle que le rapport molaire des fonctions hydrure sur les groupes vinyle est compris entre 1,1 et 4 ;

– (c) : une quantité catalytiquement efficace d'un catalyseur au platine ;

– (d) : 0 à 20 parties en poids de charges siliceuses pour 100 parties en poids de l'ensemble des organopolysiloxanes (a) + (b).

**6.** - Système selon la revendication 5, caractérisé en ce que jusqu'à 50 % en poids du polymère (a) est remplacé par un copolymère en réseau comportant les motifs triméthylsiloxane, méthylvinylsiloxane et $SiO_{4/2}$ dans lequel 2,5 à 10 % molaire des atomes de silicium comportent un groupe vinyle et dans lequel le rapport molaire des groupes triméthylsiloxane aux groupes $SiO_{4/2}$ est compris entre 0,5 et 1.

**7.** - Système selon la revendication 3 ou 4, caractérisé en ce que les compositions organopolysiloxanes sont des compositions monocomposantes réticulant à température ambiante par des réactions de polycondensation sous l'action de l'humidité, qui comportent :

– (a') : 100 parties en poids d'huile diorganopolysiloxane linéaire qui :

. est bloquée à chaque extrémité de sa chaîne par un motif triorganosilyle comportant au moins 1 groupe alkoxy ou alkoxyalkylène-oxy ayant de 1 à 6 atomes de carbone lié à l'atome de Si ; le ou les deux autre(s) groupe(s) lié(s) au Si pouvant être le cas échéant un radical hydrocarboné saturé ou non choisi parmi les radicaux méthyle, éthyle, phényle, vinyle, allyle et butène-2 yle ;

. possède dans sa chaîne des radicaux organiques liés aux atomes de silicium qui sont choisis parmi les radicaux méthyle, éthyle et phényle, au moins 60 % molaire de ces radicaux étant des radicaux méthyle, et

. présente une viscosité allant de 2 500 à 50 000 mPa.s à 25 °C ;

– (b′) : 0 à 20 parties en poids d'au moins un additif choisi parmi des aminoorganosilanes, aminoorganopolysiloxanes et guanidinoorganosilanes portant par molécule à la fois : (i) au moins un groupe organique en $C_3$-$C_{15}$ lié par une liaison SiC à l'atome de silicium et substitué par au moins un radical amino ou un radical guanidino et (2i) au moins un radical alkoxy en $C_1$-$C_6$ ou un radical alkoxyalkylène-oxy en $C_3$-$C_6$ ;

– (c′) : une quantité efficace d'un catalyseur à base d'au moins un composé d'un métal choisi parmi l'étain, le titane, le zirconium et leurs mélanges ;

– (d′) : 0 à 20 parties en poids de charges siliceuses pour 100 parties en poids de l'organopolysiloxane (a′).

**8. -** Système selon la revendication 7, caractérisé en ce que le polymère (a′) est remplacé par une huile fonctionnelle de même nature que (a′) mais possédant une viscosité allant d'une valeur supérieure à 100 000 mPa.s à 200 000 mPa.s à 25 °C, et que l'on ajoute alors dans la composition monocomposante (A) un agent plastifiant (e′) en quantité déterminée de manière à ce que la viscosité de l'ensemble huile (a′) de haute viscosité + plastifiant se situe dans l'intervalle allant de 2 500 à 50 000 mPa.s à 25 °C.

**9. -** Système selon l'une quelconque des revendications 1 à 8, caractérisé en ce que le principe actif (B) consiste dans un sel d'un hydracide ou d'un oxyacide minéral ou d'un acide organique dérivé de poly(hexaméthylène-biguanide).

**10. -** Système selon l'une quelconque des revendications 1 à 9 dans lequel la composition organopolysiloxane (A) est durcie en un élastomère silicone.

**11. -** Procédé pour lutter contre la prolifération bactérienne dans les éponges tant au cours de leur période de stockage que pendant la durée de leur utilisation, par incorporation dans les pores de celles-ci d'un principe actif biocide, ledit procédé étant caractérisé en ce qu'il consiste à enchaîner les étapes suivantes :

1. - injection au coeur de l'éponge d'une quantité efficace du système organosilicique (A) + (B) défini ci-avant dans l'une quelconque des revendications 1 à 9;

2. - puis réticulation en élastomère de la composition organopolysiloxane (A) au sein de laquelle est dispersé le principe actif (B).

**12. -** Procédé selon la revendication 11, caractérisé en ce que la quantité de système organosilicique biocide qui est injectée dans l'étape 1. est celle qui, couplée à la concentration en principe actif de ce système, est telle qu'après durcissement de la composition organopolysiloxane, la quantité d'implant introduite et retenue dans l'éponge correspond aux taux de 1 à 5 % en poids de principe actif par rapport au poids de l'éponge prise à l'état sec.

**13. -** A titre de produits industriels nouveaux, les éponges cellulosiques traitées obtenues en fin de la seconde étape du procédé selon la revendication 11 ou 12, comprenant un noyau d'élastomère situé au coeur de l'éponge dans lequel est dispersé le principe actif biocide (B).